# EUROPEAN PATENT APPLICATION

(11) **EP 2 075 702 A1**
(43) Date of publication of application: **01.07.2009**
(21) Application number: 08172136.7
(22) Date of filing: 18.12.2008
(51) Int. Cl.: G06F 11/34, G06F 11/36, G09G 5/14

(54) **Capture method and capture device**

(30) Priority: 28.12.2007 JP 2007340433
(71) Applicant: Noritsu Koki Co., Ltd, Wakayama-shi, Wakayama 640-8550 (JP)
(72) Inventor: Miyawaki, Hisashi, Wakayama 640-8550 (JP)
(74) Representative: Sajda, Wolf E.

(57) **Abstract**

It is an object to provide a capture method and a capture device capable of increasing the amount of screen data that can be saved as log. The information of active screen data in screen data displayed on a screen is acquired (S5), and the active screen data is captured (S7) when it is determined that the active screen data is from application software to be captured based on the information of the screen data. In the capture processing step (S7), an image data of a current active screen is presumptively configured so as to include a last active screen retrieved immediately before the current active screen that is positioned in a screen region other than the current active screen. A difference process of taking a pixel difference between a pixel date of a current full-screen region and a pixel date of a last full-screen region is executed, and capture process of retrieving the pixel difference data as the active screen data is executed.

## Description

### BACKGROUND OF THE INVENTION

### Field of the Invention

The present invention relates to a capture method and a capture device for retrieving screen data displayed on a screen.

### Description of the Related Art

A photo print processing system in which a photo processing device for creating a photo print and a controller are connected with a network is conventionally known. In such a system, image data received at a storefront receiving terminal or at a network receiving terminal is saved in a large-capacity storage device in units of orders. Image data read from a developed negative film by a scanner is similarly saved in the large-capacity storage device in units of orders. The image data saved in units of orders are managed by the controller.
The controller transmits the image data to the photo processing device in units of orders according to a print processing order based on the order the orders are received, a handover due date to customers and the like. The controller can also perform various correction processes on the image data. The various correction processes include special corrections such as correction of color, correction of concentration, correction of red-eye, and correction of backlight. The photo processing device processes the image data in units of orders transmitted from the controller, and creates a photo print. The controller may be configured by a dedicated device, or may be configured by a universal personal computer.

In a photo print processing system configured as above, a method of acquiring an operation history in the controller through methods such as screen capturing is proposed for purposes of verifying the operation history of the operator afterward, verifying the cause of occurrence of error, for maintenance, and the like. The currently known screen capture software has a configuration of capturing all screen data displayed on a monitor.

Japanese Unexamined Patent Publication JP-A-2003-177 847 discloses a data processing device for acquiring the operation history. The device of Japanese Unexamined Patent Publication JP-A-2003-177 847 includes an operation history receiving part for receiving the operation history using input parts such as a mouse and a keyboard with respect to various software such as basic software for managing the basic functions of the computer and application software of word processing software and a WEB browser, and the like; an operation tendency data processing part for performing a predetermined process to find out the operation tendency of a user on the software based on the operation history received by the operation history receiving part; and an operation tendency data output part for outputting the operation tendency data indicating the operation tendency of the user obtained through the predetermined process of the operation tendency data processing part.
In a case of such a device, the operation history using the input parts such as the mouse and the keyboard are acquired, and the operation history by the screen data displayed on the monitor are not acquired.

### SUMMARY OF THE INVENTION

A personal computer is normally installed with various application software such as basic OS, word processing software, spreadsheet software, and WEB browser software, where a window system is run by the basic OS, and various applications are run on the window system. When configuring the controller with a universal personal computer, the application software of the photo print processing system is installed in the personal computer. The application software of the photo print processing system is sometimes run with the various application software run.

However, if screen capture is performed using the known screen capture software when running the application software of the photo print processing system with various application software run, screens of other application software other than the screen of the application software of the photo print processing system might be captured. In particular, personal information such as an account number and a code number might be captured while using a network bank on the WEB browser.
If accounting software is run, trade secret information such as sales of a store might also be captured. Thus, unintended flow-out of personal information and trade secret information occurs if the conventionally known screen capture software is used as it is, which is a problem from a legal standpoint, and an operation history acquisition using the screen capture is not practical.

The screen data saved as a log is preferably greater the better from the standpoint of operation history acquisition. However, the ability of the personal computer used in photo studios and the hard disk capacity are often not of high specification, and the method of saving the screen data needs to be devised.

In view of the above situation, it is an object of the present invention to provide a capture method and a capture device capable of increasing the amount of screen data that can be saved as a log.

The invention for solving the above problem relates to a capture method for retrieving screen data displayed on a screen, wherein a software program is used for causing a computer to execute the steps of: a screen data information acquisition processing step of acquiring information of active screen data in screen data displayed on the screen; a determination processing step of determining whether or not the active screen data is from application software to be captured based on the acquired information of the screen data; a capture processing step of capturing the active screen data when it is determined that the active screen data is from the application software to be captured in the determination processing step; and a save processing step of saving the screen data captured in the capture processing step; wherein, in the capture processing step, an image data of a current active screen is presumptively configured so as to include a last active screen retrieved immediately before the current active screen that is positioned in a screen region other than the current active screen, a difference process of taking a pixel difference between a pixel date of a current full-screen region and a pixel date of a last full-screen region is executed, and capture process of retrieving the pixel difference data as the active screen data is executed.

A software program used in the capture method of the present invention is installed in a universal personal computer, and has a function of retrieving screen data on a screen displayed on a display part such as a monitor. The capture software program is configured to enable an active screen of the application software of a photo print processing system to be continuously captured in a predetermined cycle.
As a specific configuration, the capture software program has a function of causing a computer to execute a counting step of counting a predetermined period; a screen data information acquisition processing step of acquiring information of active screen data in the screen data displayed on the screen when the predetermined period is reached; a determination processing step of determining whether or not the active screen data is from application software to be captured based on the acquired information of the screen data; a capture processing step of capturing the active screen data when it is determined that the active screen data is from the application software to be captured in the determination processing step; and a save processing step of saving the screen data captured in the capture processing step.
In the capture processing step, an image data of a current active screen is presumptively configured so as to include a last active screen retrieved immediately before the current active screen that is positioned in a screen region other than the current active screen, a difference process of taking a pixel difference between a pixel date of a current full-screen region and a pixel date of a last full-sereen region is executed, and a capture process of retrieving the pixel difference data as the active screen data is executed.

According to the above configuration, when the application software to be captured is active and the screen thereof is active, the screen data can be captured, but the screen data of other application software displayed on the screen is not be captured. Thus, even if personal information and trade secret are contained in the screen data of another application software displayed on the screen, such information will not be captured, and thus legal problems do not arise and the operation of the operation history acquisition using screen capture becomes possible.
Furthermore, in the capture processing step, an image data of a current active screen is presumptively configured so as to include a last active screen retrieved immediately before the current active screen that is positioned in a screen region other than the current active screen, a difference process of taking a pixel difference between a pixel date of a current full-screen region and a pixel date of a last full-screen region is executed, and capture process of retrieving the pixel difference data as the active screen data is executed.
That is, if the active screen region (last screen region : upper left coordinate (100, 100); lower right coordinate (500, 500)) of the last active screen that is retrieved immediately before, and the active screen region (current screen region: upper left coordinate (100, 400); lower right coordinate (500, 800)) of the current active screen are different, the difference process is performed without regarding the last active screen region (non-overlapping region: upper left coordinate (100, 100); lower right coordinate (500, 400)) in which the last active screen region and the current active screen region are not overlapping as the changing point, and the difference data is saved.
Thus, the changing point is small and the amount of difference data is small, whereby the data saving amount of the screen data to save as a log can be increased. In particular, when the difference of the current active screen and the last active screen is taken when the active screen moves within an entire screen region, the changing point of the image becomes large, and the amount of saving data per one capture increases, but according to the present configuration, the changing point of the image becomes small, and thus the amount of saving data per one capture becomes small, and the log information amount can be increased without compressing the capacity of the hard disk.

A capture device according to another aspect of the invention relates to a capture device for retrieving screen data displayed on a screen, the capture device including: a screen data information acquiring unit for acquiring information of active screen data in screen data displayed on the screen; a determination unit for determining whether or not the active screen data is from application software to be captured based on the acquired information of the screen data; a capture unit for capturing the active screen data when it is determined that the active screen data is from the application software to be captured in the determination unit; and a saving unit for saving the screen data captured in the capture unit, wherein an image data of a current active screen is presumptively configured so as to include a last active screen retrieved immediately before the current active screen that is positioned in a screen region other than the current active screen, wherein the capture unit executes a difference process of taking a pixel difference between a pixel date of a current full-screen region and a pixel date of a last full-screen region and capture process of retrieving the pixel difference data as the active screen data.

The capture device of the present invention has a function of retrieving screen data on a screen displayed on a display part such as monitor. The capture device is configured to enable an active screen of the application software of a photo print processing system to be continuously captured in a predetermined cycle.
As a specific configuration, the capture device includes a count unit for counting a predetermined period; a screen data information acquiring unit for acquiring information of active screen data in the screen data displayed on the screen when the predetermined period is reached; a determination unit for determining whether or not the active screen data is from application software to be captured based on the acquired information of the screen data; a capture unit for capturing the active screen data when determined that the active screen data is from the application software to be captured in the determination unit; and a saving unit for saving the screen data captured in the capture unit.
An image data of a current active screen is presumptively configured so as to include a last active screen retrieved immediately before the current active screen that is positioned in a screen region other than the current active screen. The capture unit executes a difference process of taking a pixel difference between a pixel date of a current full-screen region and a pixel date of a last full-screen region and capture process of retrieving the pixel difference data as the active screen data.

The capture device can be incorporated in a personal computer installed with the application software of the photo print processing system, or can be externally connected to the personal computer as a dedicated circuit substrate board. The capture device or the dedicated circuit substrate board may have the configuration configured by a dedicated circuit, configured by a cooperative operation of a hardware source such as a CPU and a memory, and various software programs, or configured by firmware.

According to the above configuration, effects similar to the above-described program can be obtained.

### BRIEF DESCRIPTION OF THE DRAWINGS

- Fig. 1: is a view describing a function configuration of a photo print processing system;
- Fig. 2: is an operation flowchart of a capture process;
- Figs. 3A and 3B: are views each describing an execution screen of a capture software;
- Fig. 4: is a view for describing a capture condition setup screen;
- Fig. 5: is a view for describing an execution screen of the capture software;
- Fig. 6: is a view for describing captured screen data;
- Fig. 7: is a view for describing an execution screen of the capture software;
- Fig. 8: is a view for describing an execution screen of viewer software;
- Fig. 9: is a view for describing the execution screen of the viewer software;
- Fig. 10: is a view for describing an execution screen of the viewer software;
- Fig. 11: is a view for describing a capture method; and
- Fig. 12: is an operation flowchart of a capture process of another embodiment.

### DETAILED DESCRIPTION OF THE PREFERRED EMBODIMENTS

### First Embodiment

One example of a photo print processing system suitably applied to the present invention will be described with reference to the drawings.

### Overall configuration of system

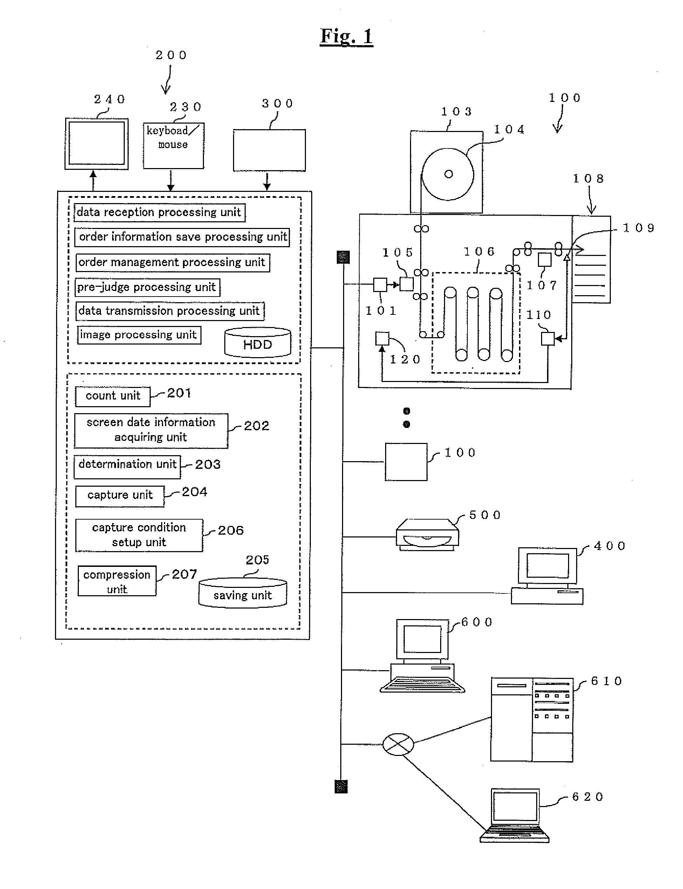

Fig. 1 is a schematic view showing one example of an overall configuration of the photo print processing system. In the present embodiment, one or more photo processing device 100 is connected to a controller 200 by way of a network such as a LAN. The controller 200 is configured by a universal personal computer, and is installed with an application software program of the photo print processing system. The application software program is configured by a combination of an image processing program module, an order management program module, a pre-judge program module to be hereinafter described, and other various modules. The controller 200 is installed with various application software such as word processing software, spreadsheet software, accounting software, and WEB browser software.

The controller 200 is connected with a scanner 300 for reading image data from a negative film. A receiving terminal 400, a recording device 500, and a network receiving terminal 600 are connected with the controller 200 by way of the network. The installing number of the receiving terminal 400, the recording device 500, and the network receiving terminal 600 is not limited to one each, and a plurality of them may be installed as necessary. The scanner 300 may have a configuration of being installed in the photo processing device 100.

The photo processing device 100 has a function of creating a photo print based on the image data transmitted from the controller 200. The image data may be image data of a frame image of the developed negative film acquired from the scanner 300, image data transmitted from the receiving terminal 400 etc. through the network, and the like.

The receiving terminal 400 is installed for example at a storefront, and can receive image data stored in a recording media of a digital camera or other recording media. The types of recording media include compact flash (registered trademark), a smart media (registered trademark), a memory stick (registered trademark), a CD-R, a DVD-R, and the like. The receiving terminal 400 is operated mainly by a customer, where the recording media brought by the customer is inserted to select the image data to create the photo print, or set the number of prints and the like. The recording device 500 has a function of writing image data, order data and the like transmitted from the controller 200 in the recording media.

The network receiving terminal 600 is configured by a personal computer, and has a function of receiving print order online through the Internet. The reception of such print order is made through a server 610 installed on the Internet. In other words, the image data related to the print order is uploaded from a personal computer 620 of the customer to the server 610, and downloaded to the network receiving terminal 600 at an appropriate timing to be used in the print process. Such system of receiving the print order online is known.

### Function block configuration of photo print processing system

Main functions of the controller 200 will be first described below. The controller 200 is installed with an application software program of the photo print processing system (hereinafter sometimes referred to as photo print processing system program) used in the photo print processing system.

As shown in Fig. 1, the photo print processing system program mainly has a function of causing a computer to execute a data reception processing step (data reception processing unit) of receiving order information including image data and order data related to a photo print order from the scanner 300, the receiving terminal 400, the recording device 500, the network receiving terminal 600 and the like; an order information save processing step (order information save processing unit) of saving the received order information in a storage medium (HDD); an order management processing step (order management processing unit) of performing management process such as adding, changing, deleting, order ordering and the like the order information; a pre-judge processing step (pre-judge processing unit) of pre-judging the image data in the order information; an image processing step (image processing unit) of image processing the image data and creating print creating image data based on pre-judge correction data created in the pre-judge processing step; and a data transmission step (data transmission processing unit) of transmitting the print creating image data to the photo processing device side in units of order according to the print processing order.
The photo print processing system program also has a program function such as a processing step of inquiring an operational status of the photo processing device, a processing step of receiving the operational status of the photo processing device and displaying the same on the screen, and a step of setup processing various set values of the photo processing device. The photo print processing system program operates in cooperation with hardware source such as a CPU and a memory of an installed personal computer, and exhibits functions thereof.

In another embodiment, the image processing step is not carried out in the controller 200, and the pre-judge correction data created in the pre-judge processing step and the image data are transmitted to the photo processing device side, and the image processing is performed in an image processing substrate configured by a dedicated circuit incorporated in the photo processing device. The pre-judge processing step is not essential to the image data of all orders, and a configuration without the pre-judge processing may be used. The image data received from the scanner 300 may be after being subjected to the pre-judge processing.

In the present invention, the pre-judge processing determines whether or not a photo print of an appropriate image quality is created before creating the photo print based on the image data, and provides a function for an operator to make determination on the image data. The pre-judge processing does not necessarily need to be performed, and the print processing may be performed without the pre-judge processing.

The pre-judge processing specifically provides a function of inputting correction data for correcting color and concentration, where the input of the relevant correction data is set as necessary. The setting of other correction data includes setting of special correction such as red-eye correction and backlight correction.

The setting of the number of prints is set to one in default with respect to the image data acquired from the scanner 300, but may be changed by the input operation of the operator.

The image data of the order information may be configured by one frame image data, or may be configured by a plurality of frame image data. The order data may include information of order ID, customer identification information, number of prints for every frame image, print size for every frame image, and the like.

The controller 200 includes an input operation unit 230 for inputting various settings, operation instruction, and the like, and a monitor 240 for displaying various settings, operation instruction, and the like. The input operation unit 230 is configured by a keyboard, a mouse, and the like. The details of the capture software program of the first embodiment will be hereinafter described, and the configurations of the scanner 300 and the photo processing device 100 will be described below.

The scanner 300 has a function of scanning the frame image formed on the developed negative film and acquiring digital image data. The read image data is transmitted to the controller 200. There are two types of reading method, pre-scanning and main scanning, where pre-scanning reads the entire negative film once at low resolution (pre-judge resolution), and the main scanning is performed after the pre-judge processing based on the pre-scanned image data and reads at high resolution (photo resolution). In this case, the scanner 300 is connected with a pre-judge processing part providing the pre-judge processing function.

The photo processing device 100 includes a reception unit 101 for receiving the print creating image data from the controller 200, an exposure unit 105 for exposing the received print creating image data onto a printing paper 104 fed out from a magazine 103, a development unit 106 for develop processing the exposed printing paper 104, a drying unit 107 for drying the developed printing paper 104, and a sort discharge unit 108 for discharging the dried printing paper 104 while sorting. A main control unit 120 for controlling the overall operation of the photo processing device 100 is also arranged.

The magazine 103 accommodates the printing paper 104 or a photosensitive material in a roll form. Two magazines 103 are installed, and printing papers of different widths can be set in advance. The printing paper 104 of long length pulled out from the magazine 103 is cut with a cutting part such as a cutter to the set print size.

The exposure unit 105 has an exposure engine, receives the print creating image data transmitted from an expansion memory of an image processing substrate 220, and prints and exposes the image on an emulsion surface of the printing paper based on the print creating image data. The exposure engine is not limited to a specific method, and may be a laser engine, a CRT engine, and a PLZT engine.

The development unit 106 performs developing process of the printing paper 104 on which the image is printed and exposed, and the drying unit 107 performs drying process of the developed printing paper 104. In the sort discharge unit 108, the finished photo print is discharged to the outside of the device main body, and is accumulated in units of order by a predetermined accumulating device.

A printing paper sensor 109 detects the printing paper 104 discharged from the sort discharge unit 108, and detects whether or not the photo prints for a certain order are all discharged. A sensor control unit 110 performs drive control of the printing paper sensor 109, and receives and analyzes the signal from the printing paper sensor 109.
When detected by the sensor control unit 110 that the photo prints for a certain order are all discharged, the main control unit 120 notifies this to the controller 200, sets the order information on the relevant order to the processed management state, and deletes the order information from the storage medium. The photo processing device 100 is not limited to the above configuration, and may adopt various configurations such as an ink-jet printer and a thermal printer (sublimation printer).

### Capture software program

The functions of the capture software program installed in the controller 200 will be described below. The program can be recorded in a storage medium and provided as a storage medium, or may be provided through a communication line (provided by download). When provided through the communication line, only one part of the function may be provided and another part may be remained in the server device, or if the function of the present invention is exhibited as the entire function, it is encompassed in the technical scope of the present invention.

Fig. 1 shows a function block diagram on the processing function of the capture software program.

Specifically, there are arranged a count unit 201 for counting a predetermined period, a screen data information acquiring unit 202 for acquiring information of the active screen data in the screen data displayed on the screen when the predetermined period is reached, a determination unit 203 for determining whether or not the active screen data is from application software to be captured based on the acquired information of the screen data, a capture unit 204 for capturing the active screen data when determined that the active screen data is from the application software to be captured by the determination unit 203, and a saving unit 205 for saving the screen data captured in the capture unit 204.
The saving unit 205 is, for example, a large capacity storage medium. An image data of a current active screen is presumptively configured so as to include a last active screen retrieved immediately before the current active screen that is positioned in a screen region other than the current active screen and the capture unit 204 executes a difference process of taking a pixel difference between a pixel date of a current full-screen region and a pixel date of a last full-screen region and capture process of retrieving the pixel difference data as the active screen data. Details will be hereinafter described.

The captured screen data is preferably subjected to compression process and then saved. The known compression algorithm, for example, a run-length compression method, a PIC compression method, JPEG compression, PNG compression, GIF compression, and the like can be applied. In the relevant case, the capture software program has a compression processing function (compression unit 207), and has a configuration of causing the computer to execute the compression processing step.

A capture condition setup unit 206 for setting the capture condition is also arranged. The capture condition setup unit 206 can set various types of capture condition, where the capture condition includes setup of a capture pattern, specification of a folder to output the capture data, the number of files to output, specification of an output size of one file (capacity for saving the capture data is determined by the number of files and the file size), a timing of capture processing, and the like. Details thereof will be hereinafter described.

### Capture Method

The processing method of the capture unit 204 will be described below.

A method of retrieving only the difference data with the screen data retrieved immediately before is provided. The difference means the changing point of the image. Since only the difference data is retrieved, the amount of saving data to save as a log can be reduced. In this case, a process of expanding the difference data at the time of reproduction is necessary. The method of retrieving the difference data includes the following methods.

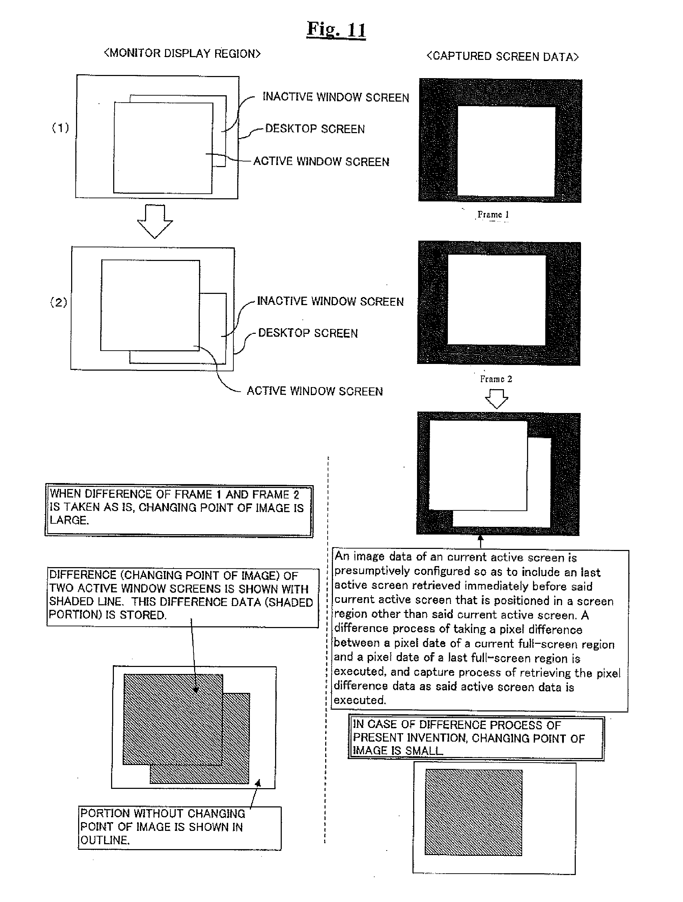

(1) In an initial retrieval, the color of the monitor display portion (desktop screen, non-active window screen, icon, task bar, and the like) other than the active window screen is black as shown in Fig. 11, and the entire display region displayed on the monitor is retrieved. The retrieved display region is assumed as frame 1.

(2) In a second and subsequent retrievals, the color of the monitor display portion other than the active window screen is black as shown in Fig. 11, and the entire display region displayed on the monitor is retrieved. The retrieved display region is assumed as frame 2. The difference process takes the difference between the current screen data (frame n) retrieved this time and the last screen data (frame (n-1)), as shown in Fig. 11.
In the difference process, an image data of a current active screen is presumptively configured so as to include a last active screen said current active screen that is positioned in a screen region other than the current active screen. The capture unit 204 executes a difference process of taking a pixel difference between a pixel date of a current full-screen region and a pixel date of a last full-screen region and capture process of retrieving the pixel difference data as the active screen data, as shown in Fig. 11.
The difference data is stored in association with the last screen data as captured screen data. That is, as shown in Fig. 11, when the active screen region of the last active screen and the screen region of the current active screen are different, the difference process is performed without regarding the last active screen region in which the last active screen region and the current active screen region are not overlapping as the changing point, and the difference data is saved. Thus, compared to the difference data taken the difference without performing such a process, the changing point of the image is small, and the screen data that can be saved as log can be increased.

The difference data having the last screen data as a reference can be accumulated by repeating the above processes. As shown in Fig. 11, when the difference between frame 1 and frame 2 is taken, the shaded portion is the changing point of the image, and the outline portion is the portion without change of image. The difference data, that is the shaded portion is stored in association with the last screen data.

Through the use of such a method, a magnitude of the changing point of the image can be verified at the time of reproduction. The data of the magnitude of the changing point is stored, and a scene jump to a frame of large changing point can be automatically carried out at the time of reproduction.

### Operation flowchart

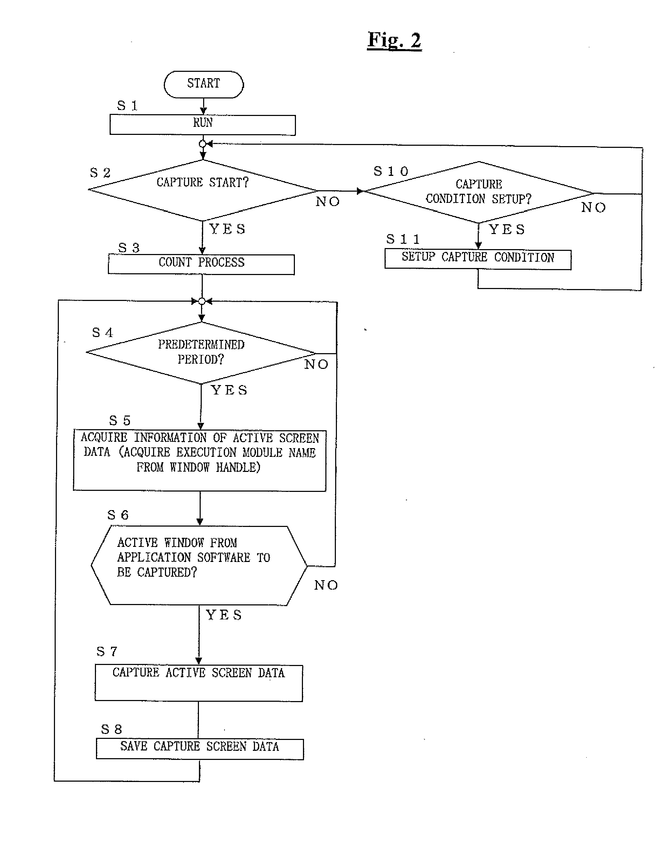

The processing flow of the capture software program will now be described below using Fig. 2. The controller 200 is configured by a personal computer, where the personal computer is an environment operating in the window system (e.g., Microsoft Windows (registered trademark) 2000, XP, VISTA (registered trademark)) manufactured by Microsoft Co. (registered trademark). Other window systems such as Mac OS, X Window System may also be used.

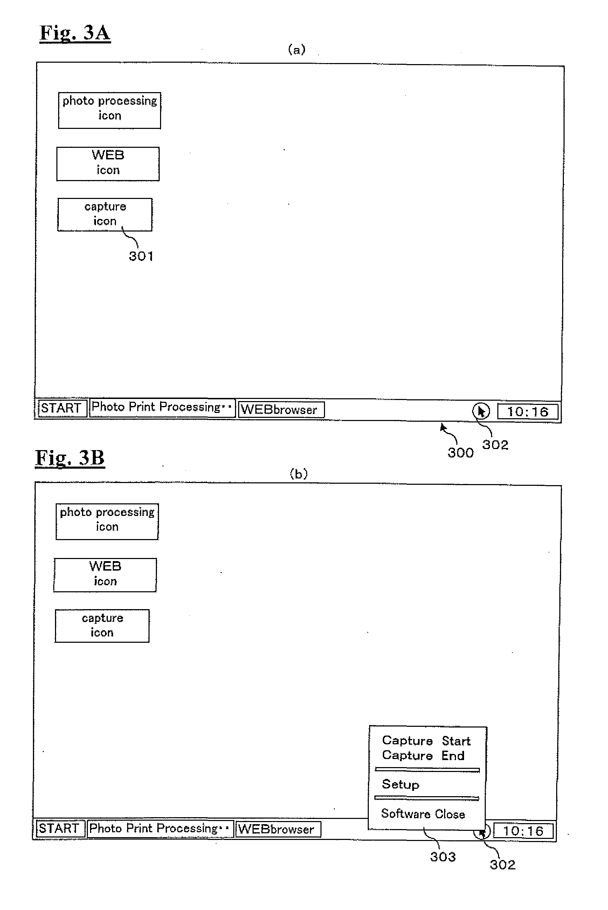

When the controller 200 is operated on the OS, a desktop screen 300 is displayed, as shown in Fig. 3A. An activation file icon of various application software is displayed on the desktop screen 300. An activation file icon 301 of the capture software program is selected and executed (S1). When executed, an icon 302 is displayed on a task bar as shown in Fig. 3A.
The capture state can be distinguished by the color of the icon. For instance, the icon background color of light blue means pause, red means capturing, and orange means occurrence of capture error. The occurrence of capture error includes a case where the file cannot be output to the storage medium (e.g., hard disc) for saving the captured screen data. As an initial setting, the setting may be made such that the capture function is automatically started by the execution of the activation file or may be in the pause state.

After the execution of the activation file (S1), whether or not the capture function is in the ON state is determined (S2), and the process proceeds to step S3 and if in the ON state. If not in the ON state, the capture function is in the pause state. In order to have the capture function in the ON state, the icon 302 of the task bar shown in Fig. 3A is clicked to display a menu 303 as shown in Fig. 3B, and "capture start" is selected from the menu 303 to start the capture function. In addition to "capture start", the menu 303 is configured to enable the selection of "capture end" (function of stopping capture), "setup" (function of setting up capture condition), and "software close" (function of closing capture software program, executed only after the capture end).

In the pause state, whether or not "setup" is selected is determined (S10). If "setup" is selected, the setup of the capture condition is performed in step S11. The "setup" is a function of the capture condition setup unit 206 that enables the setup of the conditions when not in capturing. The capture condition may have recommended conditions set in advance, but may be configured to be appropriately set depending on a convenience of a photo studio installed with the photo print processing system, the processing ability and the hard disc capacity of the personal computer used as the controller 200, and the like, and is configured to be customized to various user conditions.

### Capture condition setup

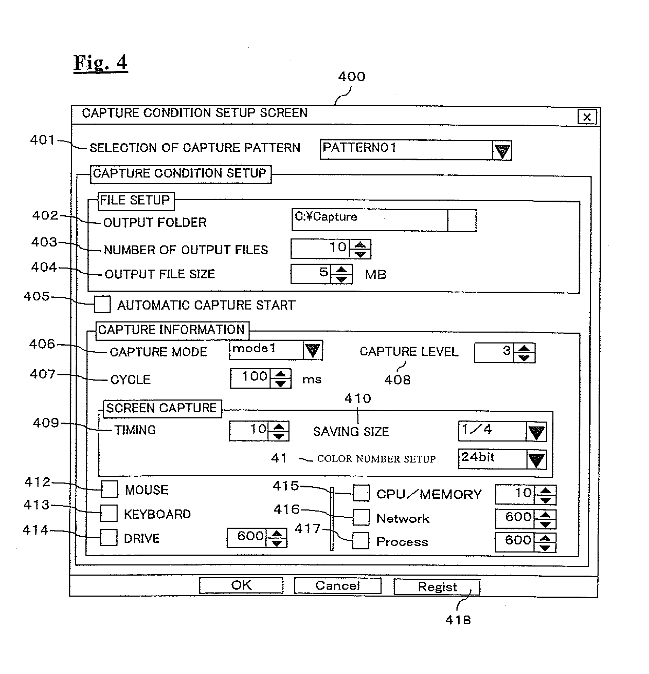

The setup of the capture condition will be described below. Fig. 4 shows one example of a capture condition setup screen 400. A "selection of capture pattern 401" is a box for setting a pattern to use. The pattern already set is displayed in a combo box. When setting a new pattern, a new name is input and saved. The saving is confirmed by pressing "Regist 418".

In "output folder 402" of the file setup field, a folder to save the captured screen data (hereinafter sometimes referred to as captured screen data) is specified. A folder list is displayed and made selectable with a button on a right side of the box. In "number of output files 403", the number of files to output is set. In "output file size 404", the output size of one file is specified. When the specified size is exceeded, the file is switched to the next file and output. The value obtained by multiplying the "number of output files 403" and the "output file size 404" is the capacity the captured screen data is saved. Therefore, the setup corresponding to the capacity of the large capacity storage medium (e.g., hard disc) of the saving unit 205 can be made.

The setting can be made such that the capture process automatically starts when the capture software program is run by checking a check box of "automatic capture start 405". In "capture mode 406" of the capture information field, various modes can be set.

A "cycle 407" of the capture information field is the setting for controlling the cycle timing of the capture process. Whether or not the process is necessary is determined for every numerical value specified thereat. In "capture level 408", the number of parent screen of the active window to capture is set.

In "timing 409" of the screen capture field, a sampling count value of the capture process is set. The screen data is captured at a time timing of the value obtained by multiplying the numerical value set in the "cycle 407" by the sampling count value set here. In the setting of Fig. 4, the screen data is captured every one second of the value obtained by multiplying 100 ms by 10. The sampling of the screen data may be performed other than at such timing, and may be acquired by pressing the mouse button, or by pressing the keyboard.

In "saving size 410" of the screen capture field, the size for saving when saving the acquired screen data is set. If a large screen is saved as is, the image in reproduction is satisfactory, but the period of being held as a log becomes shorter as the amount of saving data increases. The screen data is compressed according to the specified saving size. In "color number setup 411 ", the number of colors for saving when saving the acquired screen data is set. The original color number is held with the larger the numerical value. The amount of saving data increases with the larger the numerical value.

If the check box of "mouse 412" is checked, a mouse operation log is saved. The mouse operation log is associated with the acquired screen data. If the check box of "keyboard 413" is checked, a keyboard operation log is saved. The keyboard operation log is associated with the acquired screen data. If the check box of "drive 414" is checked, a drive change log is saved. The drive change log is associated with the acquired screen data.

If the check box of "CPU/MEMORY 415" is checked, the usage log of the CPU and the usage log of the memory are saved. Sampling is performed at the time timing of the value obtained by multiplying the numerical value (100 ms) set in the "cycle 407" by the numerical value (10) set here. If the check box of "Network 416" is checked, the network state log is saved.
Sampling is performed at the time timing of the value obtained by multiplying the numerical value (100 ms) set in the "cycle 407" by the numerical value (600) set here. If the check box of "Process 417" is checked, the process state log is saved. Sampling is performed at the time timing of the value obtained by multiplying the numerical value (100 ms) set in the "cycle 407" by the numerical value (600) set here.

The capture process will now be described. When the capture function is started, a predetermined period is counted using a timer function in the personal computer in step S3 (S3, count step). The period of capture timing is set by the capture condition setup.

When the predetermined period is reached (S4), the information of the active screen data is acquired (S5, screen data information acquire processing step). For instance, a window handle of the active screen is acquired. The execution module name is acquired from the acquired window handle. This is because the window handle and the execution module name are associated in the CPU.

Whether or not the information (herein, execution module name) of the acquired screen data is from the application software to be captured is determined (S6, determination processing step). The application software to be captured is stored in the memory and the like in advance, and is various execution modules of the photo print processing system program herein.

If it is determined that the information of the acquired screen data is from the application software to be captured, the active screen data is captured (S7, capture processing step). The above-described method can be applied for the specific method of capture. If it is determined as not from the application software to be captured in step S6, the capture process is not performed, and the process returns to step S4. That is, the screen data is not retrieved at this timing, and the captured screen data does not exist.

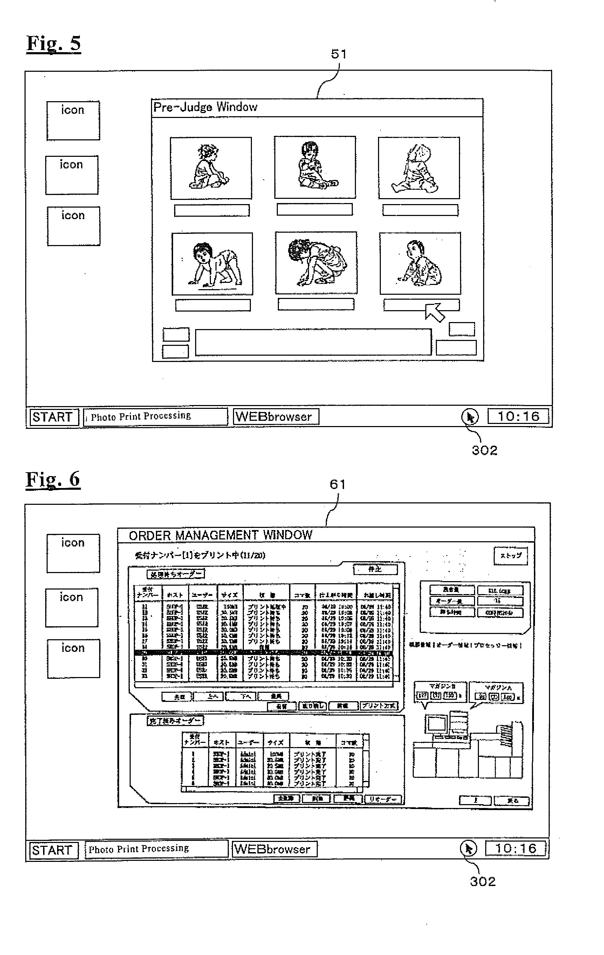

When referring to "screen is active", it means that the input operation is possible only to the relevant screen. Fig. 5 shows one example of when the screen of the photo print processing system program is active. A window screen at the middle of the screen is a screen example (example of pre-judge screen) of the photo print processing system program, and shows that it is active. The screen of other application software is inactive, and is merely displayed on the task bar at the lower region of the screen or hidden in the background of the pre-judge screen.

A specific method of capture can be applied with the above-described method. Fig. 5 shows an active pre-judge screen 51 of immediately before. Fig. 6 shows an active order management screen 61 of a timing of capturing for this time. When retrieving the active order management screen 61, other screen data other than the order management screen in the desktop screen is retrieved as black, the difference with the frame immediately before (desktop screen including pre-judge screen 51 of Fig. 5) is taken, and the difference data is associated with the last screen data.
When taking the difference, the difference process is performed with the active pre-judge screen immediately before included in the screen region other than the active order management screen for this time when the active pre-judge screen of immediately before is positioned in the screen region other than the active order management screen for this time. The difference data is stored in association with the last screen data as captured screen data.

The captured screen data is compressed by the compression unit 207, and saved in the saving unit 205 (S8, save processing step). The compression processing is not essential, but is preferred from the standpoint of ensuring the capacity of the storage medium.

The storage medium of the saving unit 205 is preferably a hard disc capable of storing large capacity data. Preferably, the amount of saving data that can be saved in the storage medium is set in advance, where old screen data is deleted when the amount of data of the saved screen data reaches the amount of saving data, so that the amount of saving data of the storage medium is maintained at not more than a certain amount and drawbacks such as the captured screen data not being saved do not occur. If the amount of captured screen data reaches the amount of saving data, the captured screen data saved in the storage medium is transferred to a medium (CD-ROM, MO, etc.) to ensure the storage region of the storage medium.

The capture process displays a menu from the icon of the task bar, and is stopped by selecting "pause", as described above. The capture process start time and the end time are set in advance, where the capture process is automatically started from the start time and automatically paused when reaching the end time. The capture process end period may be set, so that the capture process is automatically paused when a certain period has elapsed from the capture start time.

According to the above embodiment, if the application software to be captured is active and the relevant screen is active, the screen data thereof can be captured and the screen data of other application software displayed on the screen is not be captured. Thus, even if personal information and trade secret are contained in the screen data of other application software displayed on the screen, such information is not be captured, and thus legal problems do not arise, and operation of the operation history acquisition using screen capture becomes possible.
Furthermore, the data saving amount of the screen data for saving as a log can be increased. In particular, when the difference between the current active screen and the last active screen is taken when the active screen moves within an entire screen region, the changing point of the image becomes large, and the amount of saving data per one capture increases, but according to the present embodiment, the changing point of the image becomes small, and thus the amount of saving data per one capture becomes small, and the log information amount can be increased without compressing the capacity of the hard disk.

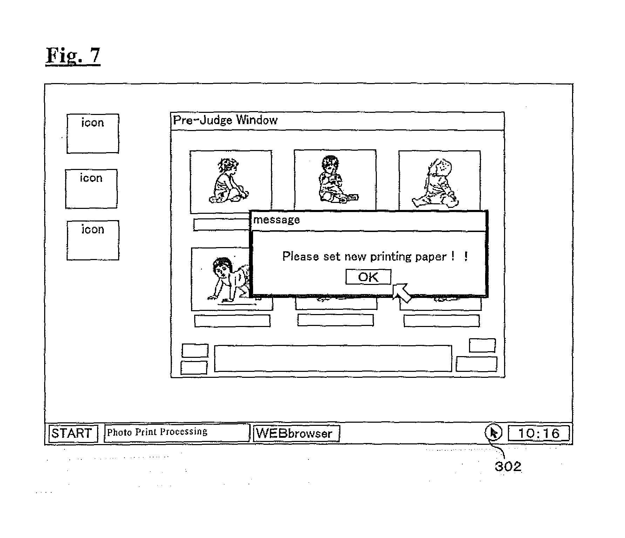

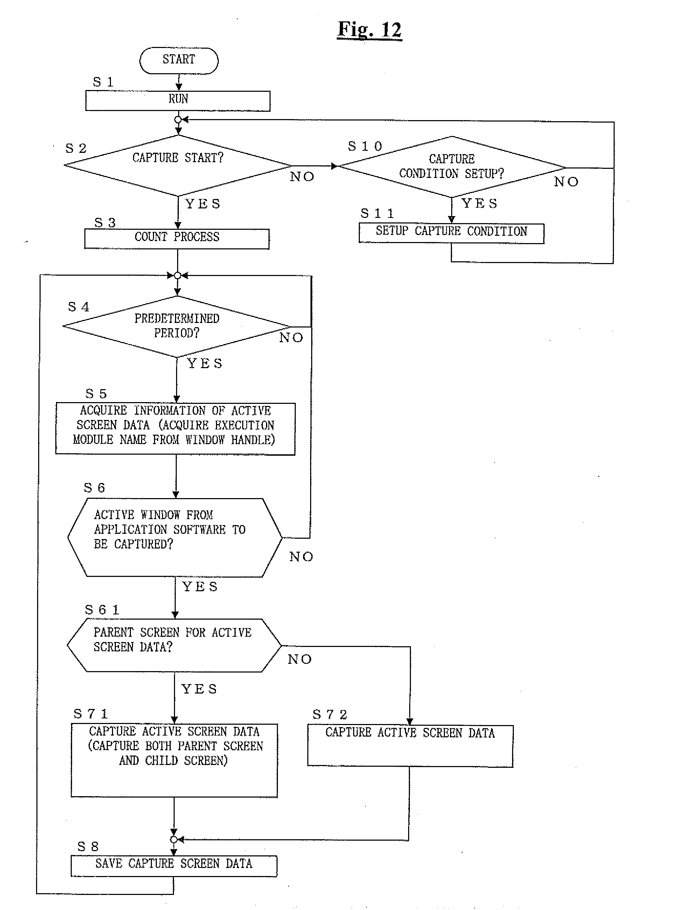

As shown in Fig. 7, the screen data of both the pre-judge screen and a message screen set in a parent-child relationship can be captured. This will be described using the flow of Fig. 12. Steps S 1 to S6, S8, S10, and S11 are operations similar to the above, and thus the description will not be given. If it is determined that the active screen data is from the application software to be captured in step S6, whether or not a parent screen exists for the active screen data is determined (S61). If it is determined that the parent screen exists, the active screen data (child screen) and the parent screen are captured (S71).
In the case of Fig. 7, the active message screen and the pre-judge screen, which is the parent screen, are simultaneously captured. If it is determined that the parent screen does not exist, the active screen data is captured (S72). The setup of the parent-child relationship can be appropriately set, and is not limited to the pre-judge screen and the message screen. The setup of the parent-child relationship includes appropriately setting the order management screen and the message screen, the order management screen and the error message screen, various operation screens and the message screen, various operation screens and the error message screen, and the like.

### Reproduction process of the capture screen data

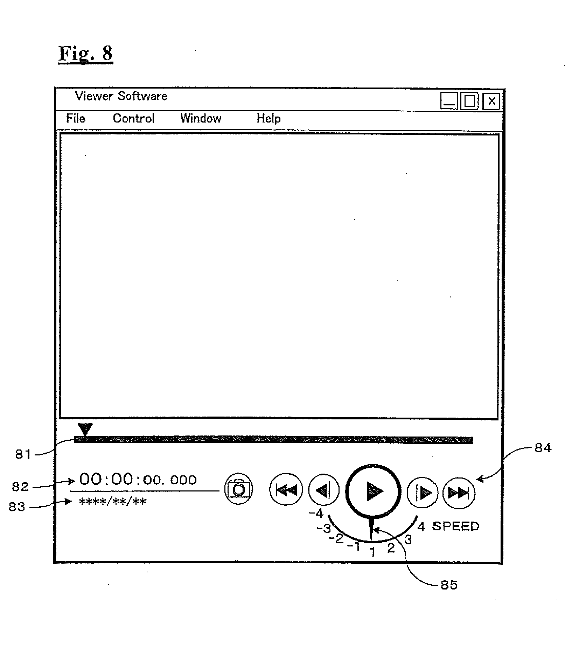

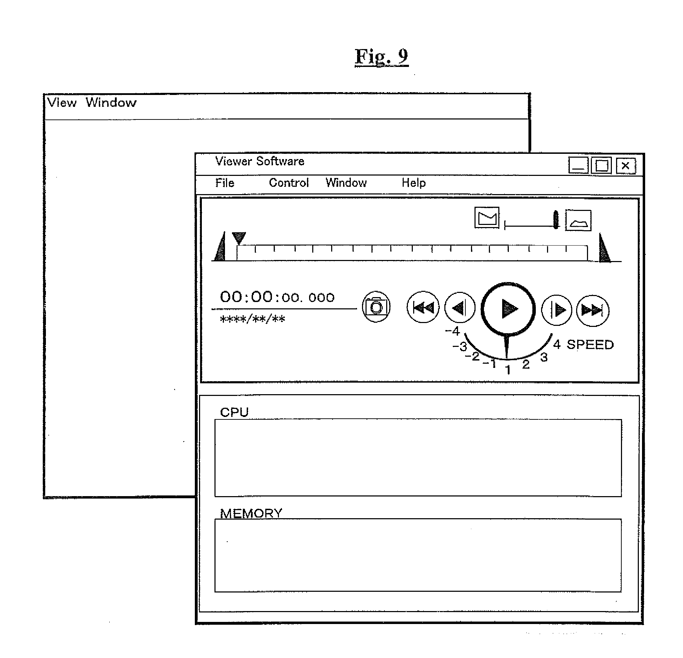

The screen data captured in the capture software program can be displayed with viewer software. When the viewer software is run, a window of a simple display mode shown in Fig. 8 is displayed. A window of a detailed display mode shown in Fig. 9 can be displayed by selecting a "switch display mode" from the item "window" of the menu. In the detailed display mode, two screens of View Window displaying the screen data and the operation of reproducing function and various log display screen window can be displayed.

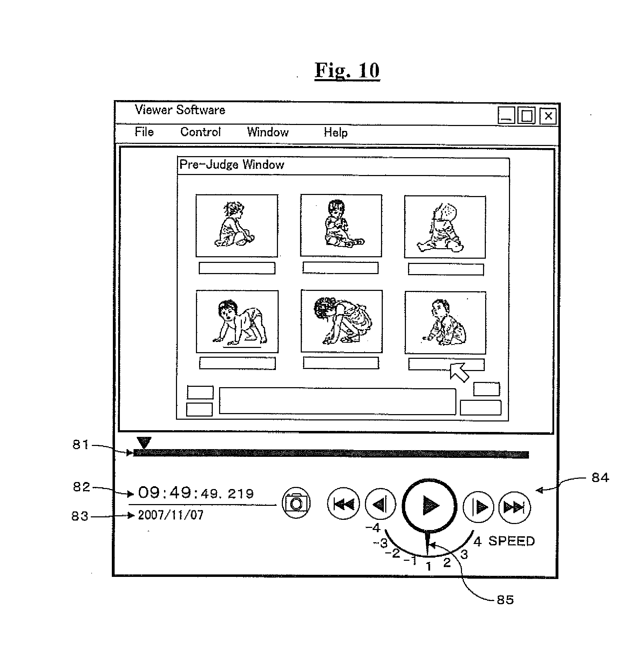

The reproduction method will now be described. First, Fig. 10 shows an example of screen data reproduced in the simple display mode. The item "file" of the menu of Fig. 8 is selected and the relevant menu is displayed. "Open file" in the menu is then selected, and the file to reproduce is selected from the list of files, which captured screen data is output. When the file is selected, the relevant file is read into the main memory from the storage medium, and reproduction is started.
The screen at the middle of the window of Fig. 10 shows the reproduced capture screen. A cursor of the mouse is also captured. If the captured screen data is compressed, a decompression process is performed and reproduction is performed. If stored as the difference data, a process of decompressing the difference data is performed.

In Fig. 10, a bar 81 at the lower part of the display window and an inverted triangle mark above the bar 81 show which position of the file being reproduced is being displayed. Below the bar 81 at the lower part of the window, a time 82 (captured local time of computer) at which the currently displayed screen data is captured, and a date 83 are displayed. On the right side of the time 82, a play/pause button (function button of switching to play or pause by pushing the button) or a button 84 for moving a predetermined amount from the current position, a play speed setting bar 85, and the like are displayed.

### Second Embodiment

A capture software program of the present invention is installed in the controller 200, and is not limited to a mode of being run by the operator on the controller 200. For instance, the activation of the capture software program can be executed from a computer (portable computer, universal personal computer, work station, server device, and the like) connected with the controller 200 through the network (including Internet connection). The captured screen data saved in the saving unit 205 can be transmitted to the computer through the network.

The capture software program can also be configured as a module configuring the photo print processing system program. In the relevant case, the photo print processing system program is run, and the capture software program is run from the operation screen. Other components can be realized with components similar to the above.

### Third Embodiment

### Capture Device

The capture device may include a count unit for counting a predetermined period, a screen data information acquiring unit for acquiring information of the active screen data in the screen data displayed on the screen when the predetermined period is reached, a determination unit for determining whether or not the active screen data is from the application software to be captured based on the acquired information of the screen data, a capture unit for capturing the active screen data when determined that the active screen data is from the application software to be captured by the determination unit, and a saving unit for saving the screen data captured in the capture unit.
An image data of a current active screen is presumptively configured so as to include a last active screen said current active screen that is positioned in a screen region other than the current active screen. The capture unit executes a difference process of taking a pixel difference between a pixel date of a current full-screen region and a pixel date of a last full-screen region and capture process of retrieving the pixel difference data as the active screen data. A compression unit for compressing the capture screen data may be arranged. The identification information (e.g., execution module name) of the application software to be captured may be stored in the storage unit such as a memory in advance.

The capture device includes a capture condition setup unit for setting the capture condition. The capture condition setup unit can setup various capture conditions, where the capture condition includes setup of a capture pattern, specification of a folder to output the capture data, the number of files to output, specification of an output size of one file (capacity for saving the capture data is determined by the number of files and file size), a timing of capture processing, and the like. The details are as described above.

The capture device can be incorporated in the personal computer installed with the application software of the photo print processing system as a dedicated circuit substrate board, or can be connected to the personal computer through the network. The capture device or the dedicated circuit substrate board can have the above configuration configured by a dedicated circuit, configured with cooperative operation of the hardware source such as a CPU and a memory, and various software programs, or configured by firmware.

The screen data captured by the capture device can be reproduced with the viewer software similar to the above, and the capture device may be equipped with the viewer software function. The captured screen data is transmitted to the network connected computer, and reproduced using the viewer software on the computer.

## Claims

1. A capture method for retrieving screen data displayed on a screen, wherein a software program is used for causing a computer to execute the following steps:
- a screen data information acquisition processing step (S5) of acquiring information of active screen data in screen data displayed on the screen;
- a determination processing step (S6) of determining whether or not the active screen data is from application software to be captured based on the acquired information of the screen data;
- a capture processing step (S7) of capturing the active screen data when it is determined that the active screen data is from the application software to be captured in the determination processing step (S6);
- wherein the capture processing step (S7) includes:
-- a step in which an image data of a current active screen is presumptively configured so as to include a last active screen retrieved immediately before the current active screen, wherein the last active screen is positioned in a screen region other than the current active screen;
-- a difference process of taking a pixel difference between a pixel date of a current full-screen region and a pixel date of a last full-screen region; and
-- a capture process of retrieving the pixel difference data as the active screen data; and
- a save processing step (S8) of saving the screen data captured in the capture processing step (S7).

2. A capture device for retrieving screen data displayed on a screen, the capture device comprising:
- a screen data information acquiring unit (202) for acquiring information of active screen data in screen data displayed on the screen;
- a determination unit (203) for determining whether or not the active screen data is from application software to be captured based on the acquired information of the screen data;
- a capture unit (204) for capturing the active screen data when it is determined that the active screen data is from the application software to be captured in the determination unit (203); and
- a saving unit (205) for saving the screen data captured in the capture unit;
- wherein an image data of a current active screen is presumptively configured so as to include a last active screen retrieved immediately before the current active screen that is positioned in a screen region other than the current active screen,
- wherein the capture unit (204) executes a difference process of taking a pixel difference between a pixel date of a current full-screen region and a pixel date of a last full-screen region and capture process of retrieving the pixel difference data as the active screen data.

3. A storage medium recorded with a capture software program for retrieving screen data displayed on a screen, wherein the capture software program comprises the following steps:
- a screen data information acquisition processing step (S5) of acquiring information of active screen data in screen data displayed on the screen;
- a determination processing step (S6) of determining whether or not the active screen data is from application software to be captured based on the acquired information of the screen data;
- a capture processing step (S7) of capturing the active screen data when determined that the active screen data is from the application software to be captured in the determination processing step (S6);
- wherein the capture processing step (S7) includes:
-- a step in which an image data of a current active screen is presumptively configured so as to include a last active screen retrieved immediately before the current active screen, wherein the last active screen is positioned in a screen region other than the current active screen;
-- a difference process of taking a pixel difference between a pixel date of a current full-screen region and a pixel date of a last full-screen region; and -
-- a capture process of retrieving the pixel difference data as the active screen data; and
- a save processing step (S8) of saving the screen data captured in the capture processing step (S7).
